# EUROPÄISCHE PATENTSCHRIFT

(11) **EP 1 528 340 B1**
(45) Veröffentlichungstag und Bekanntmachung des Hinweises auf die Patenterteilung: **05.10.2011**
(21) Anmeldenummer: 04025708.1
(22) Anmeldetag: 29.10.2004
(51) Int. Cl.: F25D 3/11, F25D 13/06, A23L 3/36

(54) **Froster und Verfahren zum Gefrieren von Produkten**
Apparatus and process for cooling products
Appareil et procédé de refroidissement de produits

(30) Priorität: 03.11.2003 DE 10351246
(43) Veröffentlichungstag der Anmeldung: 04.05.2005
(73) Patentinhaber: Linde AG, 80331 München (DE)
(72) Erfinder: Kamm, Volker, 82024 Taufkirchen (DE)
(74) Vertreter: Kasseckert, Rainer

(56) Entgegenhaltungen:
- EP-A- 0 445 476
- US-A- 5 460 015
- US-A- 5 467 612
- US-A- 5 478 584

## Beschreibung

Die Erfindung betrifft eine Vorrichtung zum Abkühlen von Produkten mit einer Transporteinrichtung, die die Produkte durch eine Kühlzone fördert, in der die Produkte einer durch tiefkalte Gase auf eine zur Abkühlung der Produkte notwendige Temperatur gebrachten Atmosphäre ausgesetzt sind, sowie ein Verfahren zur Abkühlung der Produkte. Eine Vorrichtung gemäß dem Oberbegriff des Anspruchs 1 und ein Verfahren gemäß dem Oberbegriff des Anspruchs 8 sind z.B. aus der US-A-5 460 015 bekannt.

Der Begriff Abkühlen beschreibt einerseits die Abkühlung auf Temperaturen oberhalb des Gefrierpunktes, beispielsweise die Abkühlung wärmebehandelter Lebensmittel von +70 °C auf +2 °C. Abkühlen umfaßt aber insbesondere auch Gefrieren und tiefgefrieren. Tiefgefrieren (frosten) bedeutet, dass die Lebensmittel für einen ausreichenden Zeitraum einer Atmosphäre ausreichend niedriger Temperatur ausgesetzt sind, so dass im Anschluß an den Gefriervorgang eine Kemtemperatur deutlich unterhalb des Gefrierpunktes von Wasser vorliegt, in der Regel unterhalb einer Temperatur von -18 °C.

Diese Atmosphäre oder Umgebung kann z. B. durch tiefkaltes Gas (verflüssigt oder gasförmig) oder durch abgekühlte Luft auf die gewünschte Temperatur gebracht werden. Der Wärmetausch findet dabei im Wesentlichen über konvektive Prozesse statt, beim Einsatz von verflüssigtem Gas auch über Wärmeleitung durch direkten Kontakt des Kühlmediums mit dem abzukühlenden Produkt.

Bevorzugt wird das Gas somit verflüssigt in die Abkühlvorrichtung eingebracht und durch einen Wärmeübertrag vom zu kühlenden Gut auf das Kühlmedium verdampft. Das danach wärmere und gasförmige Kühlmedium wird aus der Abkühlvorrichtung abgeführt. Die Abfuhr darf üblicherweise nicht an die Umgebung der Anlage erfolgen, da einige der geeigneten Gase die Luft verdrängen und dadurch Menschen in der Umgebung der Anlage gefährden würden. Es muss also aus Sicherheitsgründen eine Ableitung des Gases aus der Arbeitsumgebung einer derartigen Abkühlvorrichtung gewährleistet sein.

Bekannt sind Vorrichtungen zum Abkühlen (Froster) als Durchlaufanlagen, z. B. als Tunnelfroster und als Schrankfroster. Bei den Tunnelfrostem sind auch Tauchfroster zum Gefrieren von Gefriergut üblich, die ein Bad einer kryogenen Flüssigkeit aufweisen, durch das ein Förderband läuft, das das zu gefrierende Gut aus dem Bad heraus fördert. Das Gefriergut wird entweder direkt in das Bad abgeworfen oder auf ein Band aufgelegt, das das Gefriergut in das Bad befördert. Ein derartiger Tauchfroster ist beispielsweise in "Gas aktuell, Messer Griesheim GmbH, Heft 29, Ausgabe Juni 1985, Seite 10" beschrieben.

Bei derartigen Tauchfrostern können Probleme auftreten, wenn die Dichte des Gefrierguts so beschaffen ist, daß das Gefriergut aufschwimmt. In diesem Fall kann das Gefriergut nicht in einer vorgegebenen Zeit durch das Bad befördert werden. Probleme treten auch bei solchen Gütern auf, die zur Materialanhäufung neigen. Beispielsweise können Fette oder Zucker miteinander oder mit dem Förderband verkleben, so daß auch in diesem Fall keine definierte Verweilzeit des Gefriergutes im Bad eingehalten werden kann, oder ein verklumptes, undefiniertes Produkt entsteht.

Desweiteren sind Tunnelfroster bekannt, bei denen nur das unbeladene Band in ein Tauchbad aus tiefkaltem verflüssigten Gas eintaucht. Dabei entsteht jedoch eine nichthomogene Temperaturverteilung in der Vorrichtung.

Der vorliegenden Erfindung liegt die Aufgabe zugrunde, eine Vorrichtung der eingangs genannten Art zur Verfügung zu stellen, die einfach aufgebaut ist und eine effektive Abkühlung der Produkte und effiziente Nutzung des eingesetzten Kühlmediums ermöglicht, sowie ein Verfahren anzugeben, das die gestellte Aufgabe löst.

Vorrichtungsseitig wird die gestellte Aufgabe durch die Merkmale des Anspruchs 1 gelöst.

Bevorzugt sind Einsprühvorrichtungen (3) unter dem mit Produkt beladenen Teil des Transportbands (10) so angeordnet, dass das verflüssigte tiefkalte Gas mit der Untersseite des Transportbandes (10) in wärmeleitendem Kontakt steht.

Besonders bevorzugt ist mindestens ein Ventilator (6) als Axialventilator ausgebildet.

Besonders vorteilhaft weist mindestens ein Ventilator (6) ein Achse auf, die in einer zum Transportband (10) parallelen Ebene liegt.

Vorteilhaft weist mindestens ein Ventilator (6) eine Achse auf, die im Wesentlichen senkrecht zur Transportrichtung der Produkte auf dem Transportband (10) orientiert ist. Die Orientierung des Ventilators (6) ermöglicht eine Vergleichmäßigung der Temperatur in der Kühlzone und eine verbesserte Ausnutzung des gasförmigen Kaltgases.

Durch zwei Axialventilatoren (6) und eine Trennwand zwischen den beiden Axialventilatoren (6) wird eine weitere Verbesserung der Temperaturverteilung der Atmosphäre in der Kühlzone erreicht.

Mit besonderem Vorteil, z. B. für zu kühlende Lebensmittelprodukte, ist das Transportband (10) im wesentlichen aus Edelstahl gefertigt.

Verfahrensseitig wird die gestellte Aufgabe durch die Merkmale des Anspruchs 8 gelöst..

Vorteilhafterweise wird tiefkaltes verflüssigtes Gas von unten auf das Transportband (10) gesprüht und trifft auf die Unterseite des Transportbandes (10) auf, so dass ein wärmeleitender Kontakt zwischen dem tiefkalten verflüssigten Gas und der Unterseite des Transportbandes (10) zustande kommt.

Die Erfindung bietet eine Reihe von Vorteilen:
- Es wird nicht nur die Verdampfungswärme, sondern auch die restliche Gaswärme genutzt.
- Die Unterseite des Produktes wird nicht direkt gekühlt, sondern über ein Edelstahlband.
- Der Wärmeübergang von unten erfolgt als Wärmeleitung (wesentlich besser als Konvektion)
- Die Anlage muss zum Reinigen und Trocknen nicht zerlegt werden.
- Das Edelstahlband wird mittels Ventilatoren und Einsrühung über die gesamte Länge von unten gekühlt.
- Das Edelstalband wird bevor das Produkt aufgelegt wird in flüssigem Stickstoff abgekühlt
- Als Transportsystem ist beispielsweise ein Scharnierplattenband mit seitlichen Ketten vorgesehen. Dies Transpiortsystem ist durch eine homogene Oberfläche ausgezeichnet. Das Schamierplattenband wird vorteilhaft mit zusätzlichen Stegen ausgerüstet, welche die Fläche für den Wärmeübergang von unten erhöhen.

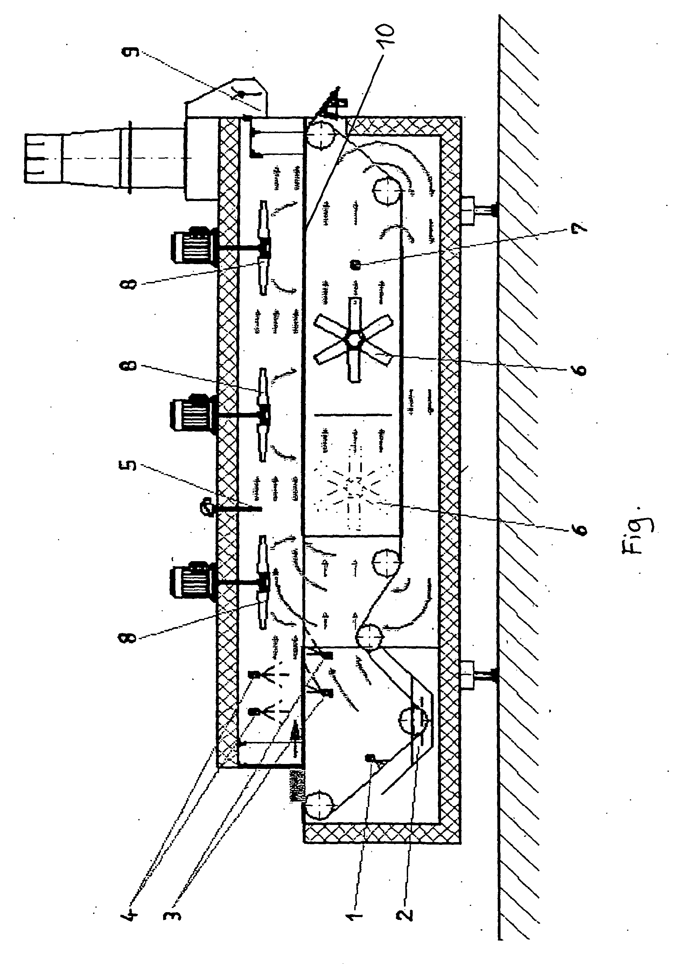

Die Erfindung sowie weitere Einzelheiten der Erfindung werden im Folgenden anhand eines in der Figur dargestellten Ausführungsbeispiels näher erläutert. Hierbei zeigt die
- Figur: einen Gefriertunnel mit erfindungsgemäßer Anordnung der Einsprühvorrichtungen und Ventilatoren.

Die Einsprühung des tiefkalten verflüssigten Gases (z. B. flüssigen Stickstoff) erfolgt über eine Edelstahlwanne 2, gesteuert über ein Magnetventil oder einen Kugelhahn zum Abkühlen des Transportbandes 10. Durch die Strömung gibt es keinen Leidenfrosteffekt. Die Einsprühung wird während des Betriebs des Gefriertunnels nur abgeschaltet wenn die LIN Sammelwanne zu voll wird.

Die LIN-Sammelwanne 2 dient zum Vorkühlen des Bandes 10 und sammeln des Stickstoffes der eigentlichen Bandkühlung. Diese Wanne 2 klappt beim Öffnen des Gefriertunnels nach unten weg. Zu Reinigungszwecken kann vorteilhaft eine Heizung zum Abdampfen des Stickstoffs installiert werden. Die Wanne 2 ist mit einer Niveauüberwachung ausgerüstet.

Die Unterbandeinsprühung 3 für das Förderband 10 dient zum ersten Nachkühlen nachdem das Produkt aufgelegt wurde. Eventuell heruntertropfender Stickstoff tropft in die LIN-Sammelwanne 2. Die Steuerung erfolgt über ein Regelventil. Die resultierende Temperatur wird mit einer Temperaturmesseinrichtung 7 gemessen.

Die Oberbandeinsprühung 4 dient der oberflächigen Wärmeabfuhr vom Produkt. Die Steuerung erfolgt ebenfalls über ein Regelventil, gemessen wird die resultierende Temperatur mit der Temperaturmesseinrichtung 5, z. B. mit einem Pt-100-Thermoelement 5 über dem Band 10, das die Temperatur der Atmosphäre über dem Transportband 10 ermittelt. Die Ventilatoren 6, welche unter dem Band 10 für einen erhöhten Wärmeübergang auf das Band sorgen, dienen zur effektiven Nutzung des kalten Stickstoffgases. Das PT-100-Thermoelement 7 zur Messung der Atmosphärentemperatur unter dem Band 10 (bei den Ventilatoren 6), dient zur Dosierung der Einsprühungmenge der Einsprühung 3.

Die Ventilatoren 8, welche über dem Band 10 für einen erhöhten Wärmeübergang auf das Produkt sorgen, ermöglichen eine effektive Nutzung des kalten Stickstoffgases. Ein Abluftsystem, saugt den expandierenden kalten Stickstoff ab und mischt ihn mit der Raumluft.

Bei der Erfindung handelt sich um einen Abkühlvorrichtung, bei welcher hauptsächlich das Band 10 gekühlt wird, auf dem das Produkt die Gefrierzone durchläuft. Durch die Vorkühlung mit flüssigem Stickstoff und die Nachkühlung durch gasförmigen kalten Stickstoff wird mit Hilfe der Axialventilatoren 6 unter dem Band 10, ein Wärmeübergang erzeugt, welcher zur starken Abkühlung des Produktes führt:

Der erfindungsgemäße Froster wird bevorzugt als Vorfroster zum Anhärten der Unterseite oder der gesamten Oberfläche des Produkts eingesetzt. Ein erfindungsgemäßer Froster eignet sich auch als "Stand-alone-Gerät", in dem das Produkt in einem Schritt durchgefroren wird, so dass auch die Kemtemperatur des Produktes unter Null Grad Celsius abgekühlt wird.

## Patentansprüche

1. Vorrichtung zum Abkühlen von Produkten, die ein Transportband (10) aufweist, das die Produkte durch eine Kühlzone fördert, in der die Produkte einer durch tiefkalte Gase auf eine zur Abkühlung der Produkte notwendige Temperatur gebrachten Atmosphäre ausgesetzt sind, wobei das Transportband (10) teilweise durch ein Tauchbad (2) aus verflüssigtem tiefkaltem Gas führt, und Einsprühvorrichtungen (1, 3, 4) für verflüssigtes tiefkaltes Gas vorgesehen sind, wobei manche (3) der Einsprühvorrichtungen (1, 3, 4) in der Nähe der Aufgabe des Produkts auf das Transportband (10) unter dem mit Produkt beladenen Teil des Transportbands (10) mit einer auf das Transportband (10) gerichteten Sprührichtung angeordnet sind, **dadurch gekennzeichnet, dass** unter dem Transportband (10) mindestens ein Ventilator (6) so angebracht ist, dass er die Temperaturverteilung in der Kühlzone vergleichmäßigt und das Transportband (10) durch gasförmiges kaltes Gas kühlt.

2. Vorrichtung nach Anspruch 1, **dadurch gekennzeichnet, dass** die Einsprühvorrichtungen (3) unter dem mit Produkt beladenen Teil des Transportbands (10) so angeordnet sind, dass das verflüssigte tiefkalte Gas mit der Unterseite des Transportbandes (10) in wärmeleitendem Kontakt steht.

3. Vorrichtung nach Anspruch 1 oder 2, **dadurch gekennzeichnet, dass** mindestens ein Ventilator (6) als Axialventilator ausgebildet ist.

4. Vorrichtung nach einem der Ansprüche 1 bis 3, **dadurch gekennzeichnet, dass** mindestens ein Ventilator (6) ein Achse aufweist, die in einer zum Transportband (10) parallelen Ebene liegt.

5. Vorrichtung nach einem der Ansprüche 1 bis 4, **dadurch gekennzeichnet, dass** mindestens ein Ventilator (6) eine Achse aufweist, die im wesentlichen senkrecht zur Transportrichtung der Produkte auf dem Transportband (10) orientiert ist.

6. Vorrichtung nach einem der Ansprüche 1 bis 5, **dadurch gekennzeichnet, dass** zwei Axialventilatoren (6) und eine Trennwand zwischen den beiden Axialventilatoren (6) vorgesehen sind.

7. Vorrichtung nach einem der Ansprüche 1 bis 6, **dadurch gekennzeichnet, dass** das Transportband (10) im wesentlichen aus Edelstahl gefertigt ist.

8. Verfahren zum Abkühlen von Produkten wobei die Produkte auf einem Transportband (10) durch eine Kühlzone transportiert werden, in der die Produkte einer durch tiefkalte Gase auf eine zur Abkühlung der Produkte notwendige Temperatur gebrachten Atmosphäre ausgesetzt sind, wobei das Transportband (10) durch Tauchen in tiefkaltes verflüssigtes Gas, durch Einsprühen von tiefkalten Gasen in die Vorrichtung und durch die von mindestens einem Ventilator (6, 8)umgewälzte kalte Atmosphäre auf eine Temperatur gebracht wird, wodurch die Produkte abgekühlt werden, **dadurch gekennzeichnet, dass** das Transportband (10) von mindestens einem unter dem Transportband (10) angeordneten Ventilator (6) durch gasförmiges kaltes Gas gekühlt wird.

9. Verfahren nach Anspruch 8, **dadurch gekennzeichnet, dass** tiefkaltes verflüssigtes Gas von unten auf das Transportband (10) gesprüht wird und auf die Unterseite des Transportbandes (10) auftrifft, so dass ein wärmeleitender Kontakt zwischen dem tiefkalten verflüssigten Gas und der Unterseite des Transportbandes (10) zustande kommt.

## Claims

1. Apparatus for the cooling of products, which has a conveyor belt (10) conveying the products through a cooling zone in which the products are exposed to an atmosphere brought by low-temperature gases to a temperature necessary for cooling the products, the conveyor belt (10) leading partially through an immersion bath (2) of liquefied low-temperature gas, and spray-in devices (1, 3, 4) for liquefied low-temperature gas being provided, many (3) of the spray-in devices (1, 3, 4) being arranged, in proximity to the feed of the product onto the conveyor belt (10), under that part of the conveyor belt (10) which is laden with product, with a spraying direction which is directed onto the conveyor belt (10), **characterized in that**, below the conveyor belt (10), at least one fan (6) is mounted such that it equalizes the temperature distribution in the cooling zone and cools the conveyor belt (10) by means of gaseous cold gas.

2. Apparatus according to Claim 1, **characterized in that** the spray-in devices (3) are arranged below that part of the conveyor belt (10) which is laden with product, such that the liquefied low-temperature gas is in thermally conductive contact with the underside of the conveyor belt (10).

3. Apparatus according to Claim 1 or 2, **characterized in that** at least one fan (6) is designed as an axial fan.

4. Apparatus according to one of Claims 1 to 3, **characterized in that** at least one fan (6) has an axis which lies in a plane parallel to the conveyor belt (10) .

5. Apparatus according to one of Claims 1 to 4, **characterized in that** at least one fan (6) has an axis which is oriented essentially perpendicularly to the direction of transport of the products on the conveyor belt (10).

6. Apparatus according to one of Claims 1 to 5, **characterized in that** two axial fans (6) and a partition between the two axial fans (6) are provided.

7. Apparatus according to one of Claims 1 to 6, **characterized in that** the conveyor belt (10) is manufactured essentially from high-grade steel.

8. Method for the cooling of products, the products being transported on a conveyor belt (10) through a cooling zone in which the products are exposed to an atmosphere brought by low-temperature gases to a temperature necessary for cooling the products, the conveyor belt (10) being brought to a temperature, as a result of which the products are cooled, by immersion in low-temperature liquefied gas, by the spraying of low-temperature gases into the apparatus and by the cold atmosphere circulated by at least one fan (6, 8), **characterized in that** the conveyor belt (10) is cooled by gaseous cold gas by at least one fan (6) arranged below the conveyor belt (10).

9. Method according to claim 8, **characterized in that** low-temperature liquefied gases is sprayed from below onto the conveyor belt (10) and impinges onto the underside of the conveyor belt (10), so that thermally conductive contact takes place between the low-temperature liquefied gas and the underside of the conveyor belt (10).

## Revendications

1. Dispositif pour refroidir des produits, qui présente une bande transporteuse (10), qui transporte les produits à travers une zone froide dans laquelle les produits sont exposés à une atmosphère amenée par le biais de gaz cryogéniques à une température nécessaire pour le refroidissement des produits, la bande transporteuse (10) passant en partie à travers un bain d'immersion (2) constitué de gaz cryogénique liquéfié, et des dispositifs de pulvérisation (1, 3, 4) pour le gaz cryogénique liquéfié étant prévus, certains (3) des dispositifs de pulvérisation (1, 3, 4) à proximité de la zone de chargement des produits sur la bande transporteuse (10) étant disposés sous la partie chargée de produits de la bande transporteuse (10) avec un sens de pulvérisation orienté vers la bande transporteuse (10), **caractérisé en ce qu'**au moins un ventilateur (6) est monté sous la bande transporteuse (10) de telle sorte qu'il homogénéise la répartition de température dans la zone de refroidissement et qu'il refroidisse la bande transporteuse (10) par un gaz froid sous forme gazeuse.

2. Dispositif selon la revendication 1, **caractérisé en ce que** les dispositifs de pulvérisation (3) sont disposés sous la partie de la bande transporteuse (10) chargée de produits, de telle sorte que le gaz cryogénique liquéfié soit en contact conducteur de la chaleur avec le côté inférieur de la bande transporteuse (10).

3. Dispositif selon la revendication 1 ou 2, **caractérisé en ce qu'**au moins un ventilateur (6) est réalisé sous forme de ventilateur axial.

4. Dispositif selon l'une quelconque des revendications 1 à 3, **caractérisé en ce qu'**au moins un ventilateur (6) présente un axe qui est situé dans un plan parallèle à la bande transporteuse (10).

5. Dispositif selon l'une quelconque des revendications 1 à 4, **caractérisé en ce qu'**au moins un ventilateur (6) présente un axe qui est orienté essentiellement perpendiculairement à la direction de transport des produits sur la bande transporteuse (10).

6. Dispositif selon l'une quelconque des revendications 1 à 5, **caractérisé en ce que** deux ventilateurs axiaux (6) et une paroi de séparation entre les deux ventilateurs axiaux (6) sont prévus.

7. Dispositif selon l'une quelconque des revendications 1 à 6, **caractérisé en ce que** la bande transporteuse (10) est fabriquée essentiellement en acier surfin.

8. Procédé de refroidissement de produits, dans lequel les produits sont transportés sur une bande transporteuse (10) à travers une zone froide dans laquelle les produits sont exposés à une atmosphère amenée par le biais de gaz cryogéniques à une température nécessaire pour le refroidissement des produits, la bande transporteuse (10), par immersion dans un gaz cryogénique liquéfié, par pulvérisation de gaz cryogéniques dans le dispositif et par l'atmosphère froide circulée par l'au moins un ventilateur (6, 8), étant amenée à une température telle que les produits soient refroidis, **caractérisé en ce que** la bande transporteuse (10) est refroidie par au moins un gaz froid sous forme gazeuse par au moins un ventilateur (6) disposé sous la bande transporteuse (10).

9. Procédé selon la revendication 8, **caractérisé en ce que** le gaz cryogénique liquéfié est pulvérisé par le dessous sur la bande transporteuse (10) et parvient sur le côté inférieur de la bande transporteuse (10), de sorte qu'un contact conducteur de la chaleur entre le gaz cryogénique liquéfié et le côté inférieur de la bande transporteuse (10) se produise.
